(19) Europäisches Patentamt
European Patent Office
Office européen des brevets

(11) **EP 4 329 045 A1**

(12) **EUROPEAN PATENT APPLICATION**
published in accordance with Art. 153(4) EPC

(43) Date of publication:
**28.02.2024 Bulletin 2024/09**

(21) Application number: **21965041.3**

(22) Date of filing: **23.11.2021**

(51) International Patent Classification (IPC):
**H01M 10/44** (2006.01)

(52) Cooperative Patent Classification (CPC):
**H01M 10/44**

(86) International application number:
**PCT/CN2021/132512**

(87) International publication number:
**WO 2023/092301 (01.06.2023 Gazette 2023/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Fujian PRC 352100 (CN)**

(72) Inventors:
• **ZOU, Qifan
Ningde, Fujian 352100 (CN)**

• **WANG, Xihui
Ningde, Fujian 352100 (CN)**
• **XU, Wenzhu
Ningde, Fujian 352100 (CN)**
• **GE, Xiaoming
Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **SECONDARY BATTERY CHARGING METHOD AND APPARATUS, AND COMPUTER STORAGE MEDIUM AND ELECTRONIC DEVICE**

(57) The present application provides a method and a device for charging a secondary battery, a computer storage medium and electronic equipment. The charging method includes steps of: sending first charge information to a charging source by a battery management system, the first charge information includes a first charge power; performing a constant-power charging on the secondary battery by the charging source according to the first charge power; sending a plurality of pulse discharge information to the charging source by the BMS when a battery status parameter reaches a first predetermined value, each pulse discharge information includes a discharge power and a discharge duration; and performing multiple constant-power pulse discharges on the secondary battery by the charging source according to the discharge power and the discharge duration in the plurality of pulse discharge information. This charging method can improve a polarization of the secondary battery and increase a cycle life of the secondary battery while satisfying a time demand of quick charge.

300

```
┌──────────────────┐                    ┌──────────────────┐
│ Charging Device  │                    │     BMS 122      │
│       20         │                    │                  │
└──────────────────┘                    └──────────────────┘
        │        S301, sending first charge information.       │
        │◄───────────────────────────────────────────────────│
┌──────────────────┐                                          │
│ Performing a     │                    ┌──────────────────────┐
│ constant power   │                    │ Detecting whether a  │
S302 │ charge on a      │                    │ battery status       │
│ battery 121 at a │                    │ parameter reaches a  │─S303
│ first charge     │                    │ first predetermined  │
│ power.           │                    │ value.               │
└──────────────────┘                    └──────────────────────┘
        │  S304, sending multiple pulse discharge              │
        │         information in sequence.                     │
        │◄───────────────────────────────────────────────────│
┌──────────────────┐                                          │
│ Performing       │
S305 │ multiple         │
│ constant-power   │
│ pulse discharges │
│ on a secondary   │
│ battery in       │
│ sequence.        │
└──────────────────┘
```

FIG. 3

EP 4 329 045 A1

**Description**

TECHNICAL FIELD

The present application relates to the field of batteries, and in particular, to a method and a device for charging a secondary battery, a computer storage medium, and electronic equipment.

BACKGROUND

Due to the advantages of high environmental protection, low noise, and low cost of use, electric vehicles have huge market prospects and can effectively promote energy saving and emission reduction, which is conducive to social development and progress, and battery technology is the core technology of electric vehicles.

Lithium-ion batteries will be polarized during charging, and the accumulation of polarization will shorten the service life of lithium-ion battery. In particular, the widely-used quick charge technology increases the polarization of the lithium-ion battery and accelerates a life decay of the lithium-ion battery while greatly shortening a charging duration.

SUMMARY

Embodiments of the present application provide a method and a device for charging a secondary battery, a computer storage medium, and electronic equipment, which can reduce the polarization of the secondary battery and improve the service life of the secondary battery.

In accordance with a first aspect, the present application provides a charging method for a secondary battery, which includes the following steps.

First charge information is sent by a battery management system (Battery Management System, BMS) to a charging source, and the first charge information includes a first charge power.

The charging source is configured to perform a constant-power charging on the secondary battery according to the first charge power.

A plurality of pulse discharge information is sent by the BMS to the charging source when a battery status parameter reaches a first predetermined value, and each pulse discharge information includes a discharge power and a discharge duration.

Multiple constant-power pulse discharges are performed by the charging source on the secondary battery according to the discharge power and discharge duration in the plurality of pulse discharge information.

In the technical solution of the embodiment of the present application, the constant-power charging is performed by the charging source on the secondary battery, and when the battery status parameter of the secondary battery reaches the first predetermined value, the multiple constant-power pulse discharges are performed by the charging source on the secondary battery.

By performing the constant-power charging, an output power of the charging source can reach a rated power, which improves an efficiency of charging, avoids a waste of capacity, and realizes a quick charge. The multiple pulse discharges are performed when the battery status parameter reaches the first predetermined value. Since the multiple pulse constant-power discharge steps are added in a constant-power charging process, a polarization of the secondary battery can be reduced and a cycle life of the secondary battery can be improved.

In some embodiments, the battery status parameter includes a state of charge (State of Charge, SOC) of the secondary battery.

In above embodiment, it is determined, according to the value of SOC, whether to start performing the constant-power pulse discharge on secondary battery, that is, the multiple constant-power pulse discharges are performed on secondary battery by the charging source when the SOC reaches the first predetermined value.

In some embodiments, the first predetermined value is above 50% SOC.

The multiple constant-power pulse discharges are performed on the secondary battery under a condition that the state of charge SOC is above 50%, which can effectively reduce the polarization of the secondary battery, shorten the charging duration, and realize the quick charge.

In some embodiments, first pulse discharge information is sent by the BMS to the charging source when the battery status parameter reaches the first predetermined value, and the first pulse discharge information includes a first discharge power and a first discharge duration. A first constant-power pulse discharge is performed by the charging source on the secondary battery according to the first pulse discharge information. Second pulse discharge information is sent by the BMS to the charging source after the first discharge duration, and the second pulse discharge information includes a second discharge power and a second discharge duration. A second constant-power pulse discharge is performed by the charging source on the secondary battery according to the second pulse discharge information.

In the above embodiments, two pulse discharges are performed by the charging source on the secondary battery, which can not only improve the polarization of the battery, but also meet the demand for quick charge.

In some embodiments, the first discharge power is greater than the first charge power, and the second discharge power is smaller than the first charge power.

The first discharge power is greater than the first charge power, that is, the first constant-power pulse discharge is a high-power discharge. The high-power discharge is performed after the constant-power charging enables the polarization to be quickly reduced. The second discharge power is smaller than the first charge power, that is, the second constant-power pulse discharge is a low-power discharge. The low-power discharge is performed after the constant-power charging can improve an anode potential after standing, thereby improving the polarization.

In some embodiments, the first discharge duration is in a range of 1 to 20 seconds, and the second discharge duration is in a range of 1 to 20 seconds.

The pulse discharge duration is preferably in a range of 1 to 20 seconds, which can not only improve battery polarization, but also meet the demand for quick charge.

In some embodiments, the constant-power charging is re-performed by the charging source on the secondary battery at the first charge power according to second charge information sent by the BMS after the multiple constant-power pulse discharges. The multiple pulse constant-power discharges are re-performed by the charging source on the secondary battery according to the plurality of pulse discharge information sent by the BMS when the battery status parameter of the secondary battery reaches a second predetermined value.

After the constant-power charging and the multiple constant-power pulse discharges are performed on the secondary battery by the charging source, the constant-power charging (a second constant-power charging) is re-performed by the charging source on the secondary battery, and the multiple pulse constant-power discharges are re-performed by the charging source on the secondary battery after the battery status parameter reaches the second predetermined value. The second constant-power charging as well as the constant-power pulse discharge are performed again after the constant-power charging and the multiple constant-power pulse discharges are performed on the secondary battery, which enables the polarization of the secondary battery to be reduced through the pulse discharge during a continuous charging process, and improves the cycle life of secondary battery.

In some embodiments, the second predetermined value is an increase in the SOC by 5%.

The constant-power charging is re-performed by the charging source on the secondary battery. Every time the SOC is increased by 5%, the multiple pulse discharges is performed again, so that the polarization is improved through pulse discharge during the continuous charging process.

In some embodiments, the constant-power charging and the multiple pulse constant-power discharge are repeatedly performed by the charging source according to the second charge information and the plurality of pulse discharge information sent by the BMS until a voltage of the secondary battery reaches a predetermined value.

The multiple pulse discharges are performed every time the SOC is increased by 5% through are-performing of the constant-power charging, so that the constant-power charging process can be continued under a state of suppressing polarization, and thus the cycle life of the secondary battery can be improved.

In accordance with a second aspect, the present application provides a charging device for a secondary battery, which includes a charging unit and a pulse discharge unit. The charging unit is configured to perform a constant-power charging on the secondary battery at a first charge power according to charge information sent by the BMS. The pulse discharge unit is configured to perform a constant-power pulse discharge on the secondary battery according to pulse discharge information sent by the BMS. The pulse discharge unit is configured to perform multiple constant-power pulse discharges on the secondary battery according to a plurality of pulse discharge information sent by the BMS when a battery status parameter reaches a first predetermined value.

In some embodiments, the charging unit is configured to re-perform the constant-power charging on the secondary battery at the first charge power after the multiple pulse discharges are performed by the pulse discharge unit. The pulse discharge unit is configured to re-perform the multiple constant-power pulse discharges when the battery status parameter of the secondary battery reaches a second predetermined value.

In some embodiments, the multiple pulse discharges and the constant-power charging are alternately performed by the pulse discharge unit and the charging unit until a voltage of the secondary battery reaches a predetermined value.

In accordance with a third aspect, the present application provides a computer-readable storage medium, in which a computer-executable instruction is stored, and when the computer-executable instruction is executed by a processor, the charging method of the secondary battery in any of the above-mentioned embodiments is implemented.

In accordance with a fourth aspect, the present application provides electronic equipment, which includes a memory storing a computer instruction, and a processor. The process is configured to perform the charging method for the secondary battery in any of the above embodiments by executing the computer instruction.

BRIEF DESCRIPTION OF DRAWINGS

Technical solutions of embodiments of the present application are described below with reference to the drawings. The following drawings are only used to illustrate preferred embodiments, and are not intended to limit the present application. In addition, the same components are denoted by the same reference numerals throughout the drawings.

FIG. 1 is a schematic diagram of an electrical device and a charging device according to some embodiments of the present application;
FIG. 2 is a schematic diagram of a charging system according to some embodiments of the present application;

FIG. 3 is a flowchart of a charging method for a secondary battery according to some embodiments of the present application;
FIG. 4 is a waveform diagram of a charge power of a charging method for a battery according to some embodiments of the present application;
FIG. 5 is a flowchart of a charging method for a secondary battery according to one embodiment of the present application;
FIG. 6 is a waveform diagram of the charge power of the charging method for the battery according to some other embodiments of the present application;
FIG. 7 is a flowchart of a charging method for a secondary battery according to another embodiment of the present application;
FIG. 8 shows experimental results of an improvement of anode instantaneous potential when a pulse discharge is performed at different discharge powers after a constant-power charging;
FIG. 9 shows experimental results of an improvement of anode instantaneous potential when a pulse discharge is performed at different discharge durations after the constant-power charging;
FIG. 10 shows experimental results of an improvement of anode potential in conditions that the pulse discharge is performed at different discharge powers after the constant-power charging, and a battery 121 is left standing;
FIG. 11 shows experimental results of an improvement of anode potential in conditions that the pulse discharge is performed at other different discharge powers after the constant-power charging, and the battery 121 is left standing;
FIG. 12 shows experimental result of constant power cycle curves according to an embodiment and some comparative examples of the present application;
FIG. 13 shows experimental results of constant power cycle curves according to some comparative examples of the present application;
FIG. 14 is a structural diagram of a charging device 20 according to the present application; and
FIG. 15 is a structural diagram of electronic equipment according to the present application.

DETAILED DESCRIPTION OF EMBODIMENTS

Technical solutions of embodiments of the present application will be described in detail below with reference to the drawings. The following embodiments are intended only to clearly illustrate the technical solutions of the present application, and are not intended to limit the protection scope of the present application.
Unless otherwise defined, all technical and scientific terms used herein have the same meaning as those skilled in the art generally understand. The terms used herein are only for the purpose of describing specific embodiments, and are not intended to limit the present application. The terms "comprising" and "having" as well as any variations thereof in the specification and claims of the present application and in the description of the above drawings are intended to cover a non-exclusive inclusion.
In the description of the embodiments of the present application, technical terms "first" and "second" are only used to distinguish different objects, and should not be understood as indicating or implying relative importance or implicitly indicating a quantity, a specific order, or a primary-secondary relationship of the indicated technical features.
Various embodiments described in the specification are not mutually exclusive, and those skilled in the art can combine the various embodiments according to the technical ideas and technical common sense of the invention.
In the description of the embodiment of the present application, the term "and/or" is only an association relationship describing associated objects, which indicates that there may be three kinds of relationships, for example, A and/or B may include three cases that: A exists alone, A and B exist simultaneously, and B exists alone. In addition, the character "/" inhere generally indicates that the associated objects are in an "or" relationship.
In the description of the embodiments of the present application, the term "multiple" refers to more than two (including two), "multiple groups" refers to more than two groups (including two groups), and "multiple pieces" refers to more than two pieces (including two pieces).
In the description of the embodiments of the present application, unless otherwise expressly specified and defined, terms such as "installation", "in connection with", "connected to", "fixation", etc., should be understood in a broad sense, for example, it may be a fixed connection or a detachable connection, or an integration; it may be a mechanical connection or an electrical connection; it may be a direct connection or an indirect connection through an intermediary; and it may be an internal communication between two components or an interaction between two components. For those of ordinary skills in the art, the specific meanings of the above terms in the embodiments of the present application can be understood according to specific situations.
A power battery is a battery that provides a power source for an electrical device, and the power battery may be various types of secondary batteries. The secondary batteries, also known as rechargeable batteries or storage batteries, refer to batteries that can be activated by charging an active material after the battery is discharged and continue to be used. For example, the power battery may be a secondary battery such as a lithium-ion battery, a lithium metal battery, a lead-acid battery, a nickel-cadmium battery, a nickel-metal hydride battery, a lithium-sulfur battery, a lithium-air battery, or a sodium-ion battery, which is not specifically limited in the embodiments of the present application. In terms of battery scale, the power battery in the embodiment of the present application may be a cell/battery cell, or a battery module or battery pack, which is not specifically limited in the embodiments of the present application. The electrical device may be a vehicle, a watercraft, a spacecraft, etc., which is not limited in the embodiments of the present application. A battery management system (Battery Management System, BMS) of the power battery is a control system that protects the safety of the power battery, and implements functions such as a charge and discharge management, a high voltage control, a battery protection, a collection of battery data, and an evaluation of battery status. A charging pile, also known as a charging machine, or a charging source, is a device for charging a power battery. The charging pile may output a charge power according to a charging demand of the BMS to charge the power battery. For example, the charging pile may output a voltage and a current to perform a charging according to a charging voltage, a charging current and a charging duration sent by the BMS.

During a charging process, the battery is generally charged by means of continuous charging of the charging pile. In case that the battery is continuously charged, a charging current flowing through the battery will lead to a potential of an electrode of the battery deviates from an equilibrium electrode potential, that is, an electrode polarization occurs. The electrode polarization will degrade a performance of the battery, greatly shorten a cycle life, and reduce a charging capacity of the battery.

In the conventional art, a commonly-used charging method for reducing polarization is a constant-current and constant-voltage charging method, that is, after a constant-current charging, a constant-voltage charging process is added to charge at a lower current to reduce polarization. This method is widely-used in a charging process of lithium-ion batteries.

For example, in a constant-current and constant-voltage charging, the constant-current charging is firstly performed, when a voltage of the battery approaches a termination voltage, the constant-voltage charging is performed at a lower current. For example, for a battery having a capacity of 800 mA.h, the termination voltage of charging is 4.2 V. The battery is charged at a constant current of 800 mA (a charging rate of 1 C), and the voltage of the battery rises in a large slope at the beginning. When the voltage of the battery approaches 4.2V, the battery is charged at a constant voltage of 4.2 V, the current of the lithium battery will gradually drop, and the voltage changes little. It is considered that the battery is almost fully-charged when the charging current drops to 1/10 C (approximately 80 mA), and the charging process may be terminated.

Another charging method to reduce polarization is to provide a negative pulse current during the constant-current charging. For example, the battery is charged at a constant charging current for a long time, after standing still, the battery is discharged at a constant discharge current for a short time, and then repeat the constant-current charging and constant-current discharge until the battery voltage reaches a charging cut-off voltage. This method can effectively reduce the accumulation of polarization of the battery, reduce the heat generation of the battery, and increase the charging speed.

The constant-current and constant-voltage charging or the charging method of providing negative pulse current during a constant-current process is effective for reducing polarization, but will cause an output power of the charging machine to fail to reach the rated power, resulting in a waste of capacity, which is not conducive to improve a charging efficiency of the charging pile. Moreover, the constant-current and constant-voltage charging method cannot be used in many cases, for example, the frequency modulation and peak regulation of power grid.

A constant-power charging, that is, a certain constant output power is maintained by the charging pile to charge the battery, which can ensure a high efficiency of charging and is conducive to the quick charge. However, the constant-power charging will produce larger electrode polarization, and the polarization cannot be reduced by providing a constant-voltage charging or a constant-current pulse discharge.

In another aspect, as electric vehicles and other electrical devices gradually enter into daily life, the demand for shortening the charging duration is getting higher and higher, and quick charge has become a key factor affecting the promotion and development of the electric vehicle industry. At present, quick charge has been widely-used in the charging of power batteries, quick charge technology uses high power and high current, which can greatly shorten the charging duration, but will cause a large polarization, so that the quick charge will reduce the performance of the battery and shorten the service life of the battery. For example, for a ternary material system having a higher voltage platform and higher energy density, due to the wide range of voltage span during use, and the larger polarization of the battery, the quick charge will greatly affect the service life of the battery.

An embodiment of the present application provides a charging method that can effectively reduce polarization and realize quick charge under the constant-power charging while improving the service life of the secondary battery.

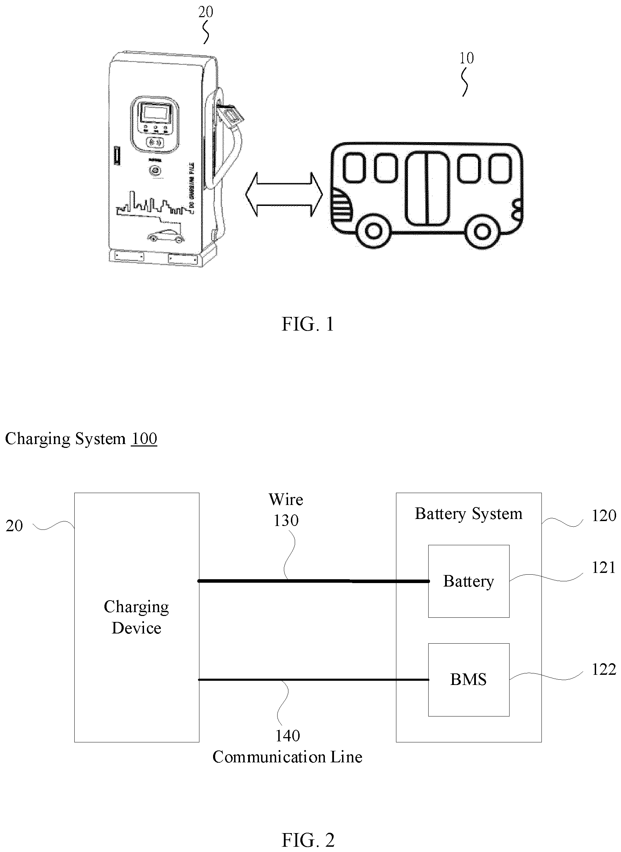

FIG. 1 is a schematic diagram of an electrical device and a charging device according to some embodiments of the present application.

As shown in FIG. 1, the electrical device 10 is an electric vehicle, which may be a pure electric vehicle or a pluggable hybrid electric vehicle. A battery 121 (see FIG. 2) is arranged inside the electric vehicle 10 to supply power to the electric vehicle 10.

The charging device 20 is a device for charging the battery 121 and controlling the discharge of the battery 121. The charging device 20 in the embodiment of the present application may be an ordinary charging pile, a super charging pile, a charging pile supporting a vehicle to grid (vehicle to grid, V2G) mode, or a charging and discharge device/equipment capable of charging and discharging a battery, etc. The specific type and application scenarios of the charging device 100 are not limited in the embodiments of the present application.

FIG. 2 is a schematic diagram of a charging system according to some embodiments of the present application.

As shown in FIG. 2, the charging system 100 includes a charging device 20 and a battery system 120, for example, the battery system 120 is installed on the electric vehicle 10.

For example, the battery system 120 has at least one battery pack (battery pack), the battery pack may be collectively referred to as a battery 121. As mentioned above, in this embodiment, the specific type and scale of the battery 121 are not specifically limited in here.

To manage and maintain the battery 121, prevent the battery from being over charged or over discharged, and prolong the service life of the battery, the battery system 120 is also provided with a battery management system (battery management system, BMS) 122 for monitoring a status of the battery 121. The BMS 122 may be integrated with the battery 121 and arranged in the same device, or may be arranged outside the battery 121 as an independent device.

As shown in FIG. 2, the charging device 20 may be connected to the battery 121 through a wire 130, and connected to the BMS 122 through a communication line 140, and the communication line 140 is used for information exchange between the charging device 20 and the BMS 122. For example, the communication line 140 may be a controller area network (control area network, CAN) communication bus, or a daisy chain (daisy chain) communication bus.

In addition to communicating with the BMS 122 through the communication line 140, the charging device 20 may also communicate with the BMS 122 through a wireless network. The communication type between the charging device 20 and the BMS 122 is not specifically limited in the embodiments of the present application.

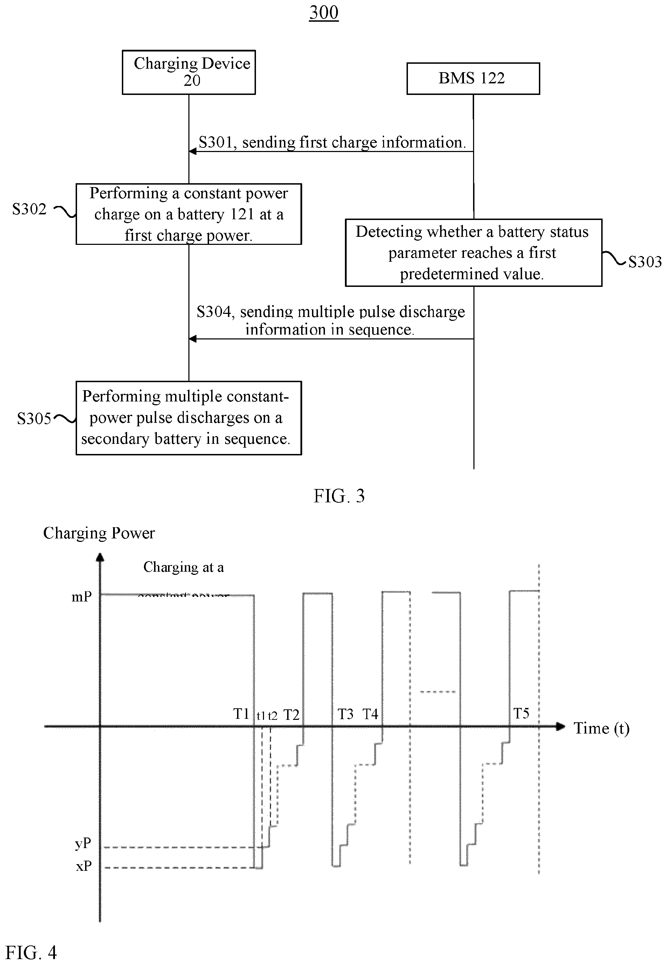

FIG. 3 is a flowchart of a charging method for a secondary battery according to some embodiments of the present application.

The charging method 300 shown in FIG. 3 is applicable to the charging device 20 and the battery system 120 shown in FIG. 1 and FIG. 2.

As shown in FIG. 3, the charging method 300 for the secondary battery in this embodiment includes the following steps S301 to S305.

In step S301, first charge information is sent by the BMS 122 to the charging device 20 via the communication line 140. The first charge information includes but not limited to a first charge power, which may be used as a charging request sent by the BMS 122 to the charging device 20, that is, the BMS 122 requests the charging device 20 to perform the constant-power charging on the battery 121 at the first charge power.

In step S302, a constant-power charging is performed by the charging device 20 on the battery 121 at a first charge power according to the first charge information that is received.

In step S303, a status parameter of the battery 121 is detected and calculated by the BMS 122.

In this embodiment, the status parameter of the battery 121 may be a battery temperature, a battery voltage, a battery capacity, a state of charge (State of Charge, SOC) of the battery 121, etc., and the status parameter of the battery is acquired through calculation by the BMS 122.

In step S304, a plurality of pulse discharge information are sent by the BMS 122 in sequence to the charging device 20 as a charging request sent by the BMS 122 to the charging device 20 when the status parameter reaches a first predetermined value. For example, each pulse discharge information includes but not limited to a discharge power and a discharge duration.

In step S305, multiple constant-power pulse discharges are performed in sequence by the charging device 20 on the battery 121 according to the discharge power and the discharge duration in the pulse discharge information that is received.

As mentioned above, in this embodiment, the constant-power charging is performed on the battery 121 by the charging device 20, and in case that a battery status parameter of the battery 121 reaches the first predetermined value, multiple constant-power pulse discharges are performed on the battery 121 by the charging device 20, which can improve the polarization of battery and ensure the quick charge. The charging method for the battery of this embodiment will be specifically described below.

FIG. 4 is a waveform diagram of the charge power of the charging method for the battery according to some embodiments of the present application.

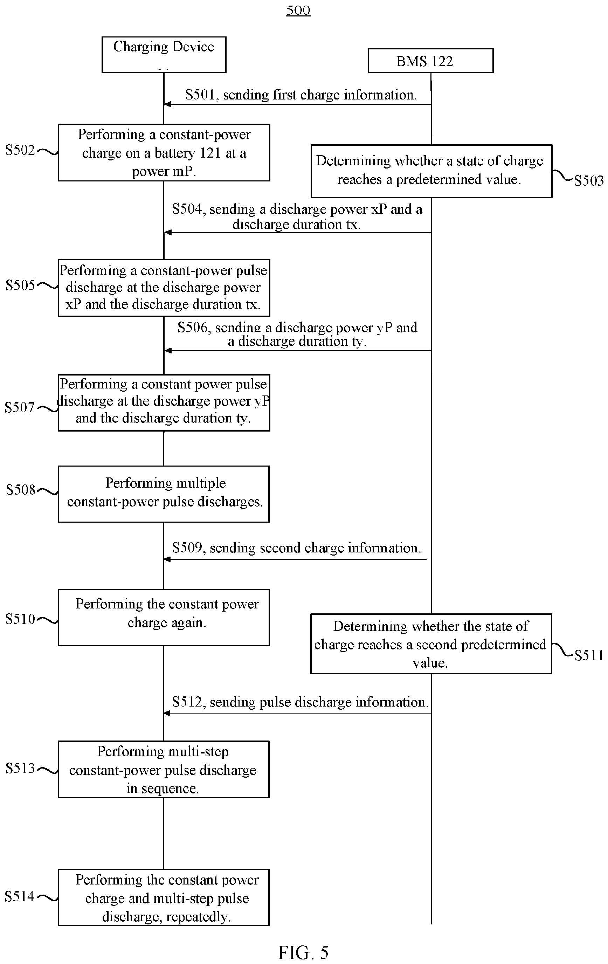

In FIG. 4, the horizontal axis is time, and the vertical axis is a charge power, that is, a power of the charging device 20 to charge the battery 121. A positive charge power represents a charging, and a negative charge power represents a discharge. The power values mP, xP, yP, etc. will be described in detail with reference to FIG. 5.

As shown in FIG. 4, from time 0 to time T1, the battery 121 is charged by the charging device 20 at a constant power mP, and from T1 to T2, multiple pulse discharges are performed on the battery 121 by the charging device 20 at different powers xP, yP..., and different discharge durations. From T2 to T3, the battery 121 is re-charged by the charging device 20 at a power mP, and from T3 to T4, multiple pulse discharges are performed again on the battery 121 by the charging device 20 at different powers and different discharge durations. From T4 to T5, the above steps are repeated until the battery 121 is fully charged or charged to a certain state of charge.

That is, the charging method for the battery of this embodiment includes the constant-power charging and multi-step constant-power pulse discharge.

Hereinafter, the constant-power charging and the multi-step constant-power pulse discharge shown in FIG. 4 will be described in detail with reference to FIG. 5.

FIG. 5 is a flowchart of a charging method for a secondary battery according to one embodiment of the present application.

Hereinafter, P represents the 1-hour rated charge power of the charging device 20, that is, the charge power required to fully charge the battery within 1 hour, and P is a product of a discharge voltage platform and a battery capacity of a battery cell.

As shown in FIG. 5, the charging method 500 for the secondary battery in this embodiment includes the following steps S501 to S514.

In step S501, first charge information is sent by the BMS 122 to the charging device 20 as a charging request sent by the BMS 122 to the charging device 20. For example, the first charge information includes a charge power for the constant-power charging.

Hereinafter, the charge power (a first charge power) contained in the first charge information is set as mP, where the value of the coefficient m may be determined according to an actual charging capacity of the battery cell of the battery 121, for example, mP may be the maximum charge power of the battery without lithium precipitation. In an embodiment, m=2 may be set, for example.

In step S502, a constant-power charging is performed on the battery 121 by the charging device 20 at the first charge power mP.

In step S503, a battery status parameter of the battery 121 is detected and calculated by the BMS 122, and whether the battery status parameter reaches a predetermined value is determined by the BMS 122.

In this embodiment, the battery status parameter is preferably a state of charge SOC. The state of charge SOC is a ratio of a current charge capacity of the battery 121 to a fully-charged capacity of the battery 121, which is usually expressed as a percentage, and the value range is 0~100%. 0% SOC indicates that battery 121 has discharged to a lower limit of voltage, and 100% SOC indicates that battery 121 is in the fully-charged state.

That is, in this step, the BMS 122 is configured to measure and calculate the SOC of the battery 121, and determine whether the SOC of the battery 121 reaches a predetermined value k.

In step S504, pulse discharge information is sent by the BMS 122 to the charging device 20 in case that the state of charge SOC reaches the predetermined value k, and the pulse discharge information includes a discharge power xP and a discharge duration tx. The value of the coefficient x and the discharge duration tx may be determined according to the requirement of eliminating polarization. In this embodiment, the discharge duration tx is preferably 1 to 30 seconds.

In a charging process shown in FIG. 5, the state of charge SOC increases as the charging process progresses. It is noted by the inventors that after the constant-power charging, a step pulse discharge starts when the state of charge SOC reaches a certain value, which can effectively reduce the polarization of the battery 121.

In step S505, a constant-power pulse discharge is performed on the battery 121 by the charging device 20 according to the received discharge power xP and discharge duration tx, and the discharge duration is tx. Referring to the waveform of pulse discharge power from T1 to t1 in FIG. 4.

In step S506, pulse discharge information is sent by BMS 122 to the charging device 20, and the pulse discharge information includes a discharge power yP and a discharge duration ty. The value of the coefficient y and the discharge duration ty may be determined according to the requirement of eliminating polarization. In this embodiment, the discharge duration ty is preferably 1 to 30 seconds.

In step S507, a constant-power pulse discharge is performed on the battery 121 by the charging device 20 according to the received discharge power yP and discharge duration ty, and the discharge duration is ty. Referring to the waveform of pulse discharge power from time t1 to time t2 in FIG. 4.

In step S508, the steps S506 and S507 are repeated at different discharge powers and different discharge durations, and multiple pulse discharges at different powers and different discharge durations are performed. Referring to the waveform of pulse discharge power from time t2 to time T2 in FIG. 4.

In step S509, the constant-power charge information including the first charge power mP is sent by the BMS 122 to the charging device 20 again in case that the predetermined pulse discharge according to the pre-established charging scheme is completed by the charging device 20.

In step S510, the constant-power charging is performed by the charging device 20 on the battery 121 again at the charge power mP, to continue the charging process. Referring to the waveform of constant-power charge power from time T2 to time T3 in FIG. 4.

In step S511, the SOC of the battery 121 is detected and calculated by the BMS 122, and whether the SOC of the battery 121 reaches a predetermined value k2 is determined by the BMS 122.

In step S512, the pulse discharge information is sent by the BMS 122 to the charging device 20 in case that the state of charge SOC reaches the predetermined value k2, and the pulse discharge information includes the discharge power and the discharge duration.

In step S513, the constant-power pulse discharge is performed on the battery 121 by the charging device 20 according to the pulse discharge information that is received, i.e., the discharge power and the discharge duration, and after a preset discharge duration, another pulse discharge information is sent by BMS 122 to the charging device 20, the constant-power pulse discharge is performed on the battery 121 by the charging device 20 at different discharge powers, until the predetermined pulse discharge steps are completed. Referring to the waveform of pulse discharge from time T3 to time T4 in FIG. 4.

In step S514, the steps S509 to S513 are repeated in this way, continuously performing the constant-power charging and multi-step constant-power pulse discharge on the battery 121 until the battery 121 is fully charged or charged to a certain state of charge. Referring to the waveforms from T4 to T5 in FIG. 4.

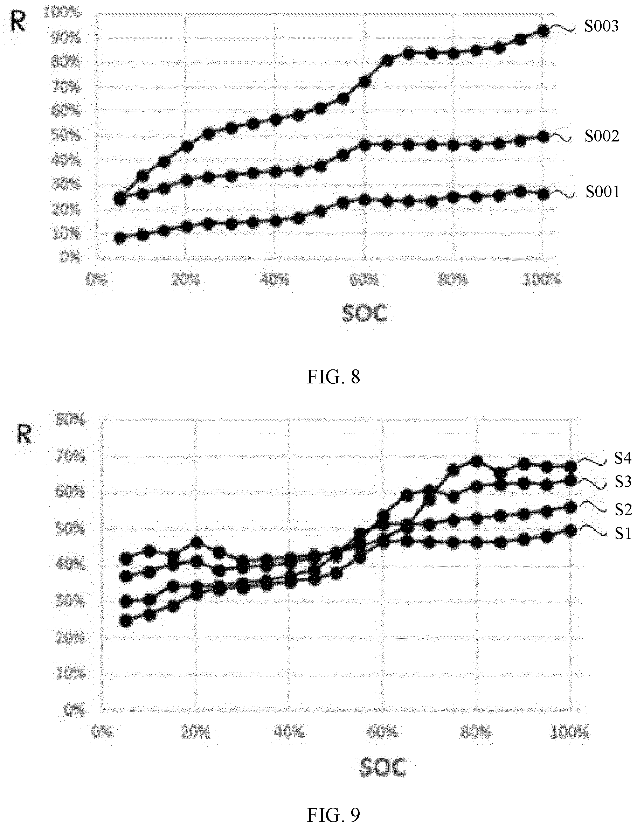

As mentioned above, after the constant-power charging, the step pulse discharge starts after the value of SOC reaches a certain value k, which can effectively reduce the polarization of the battery 121. According to the experimental results in FIG. 8 to FIG. 11, the polarization can be significantly improved when k≥40% SOC. Considering the demand for quick charge, it would be necessary to shorten the number of subsequent pulse discharges, so k≥50% is preferred in this embodiment.

In steps S511 and S512, the value of k2 is preferably an increase in the SOC of battery 121 by 5%. That is, the pulse discharge information is sent by the BMS 122 to the charging device 20 every time 5% electric quantity is charged.

As mentioned above, in this embodiment, by adding multi-step constant-power pulse discharge steps in the constant-power charging process, the polarization of the battery 121 can be reduced, the cycle life of the battery 121 can be improved, and the quick charge can be ensured.

The number of pulse discharges is not limited in the above embodiments.

The fewer the number of pulse discharges, the shorter the pulse discharge duration, the rapid charging may be realized by reducing the impact of the setting of pulse discharge step on the charging duration. Thus, in some embodiments of the present application, the number of constant-power pulse discharges is limited to two. The details will be described below.

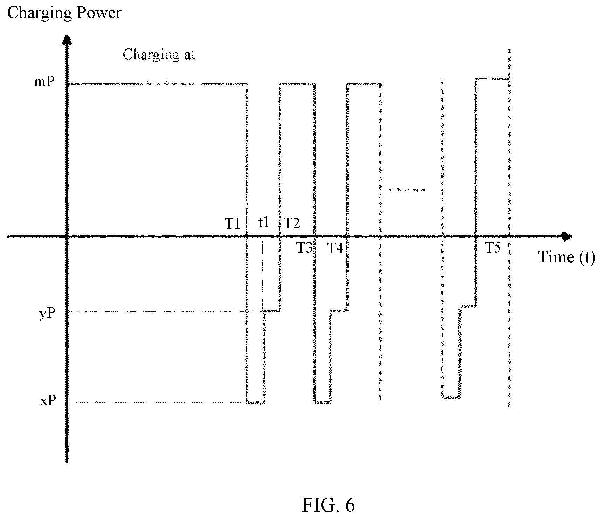

FIG. 6 is a waveform diagram of a charge power of a charging method for a battery according to other embodiments of the present application.

In FIG. 6, the horizontal axis is time, and the vertical axis is a charge power, that is, the charge power of the charging device 20 for charging the battery 121. A positive charge power represents a charging, and a negative charge power represents a discharge.

As shown in FIG. 6, from 0 to T1, the battery 121 is charged by charging device 20 at a constant power mP, and from T1 to T2, two pulse discharges are performed on the battery 121 by the charging device 20 at powers xP, yP, respectively. From T2 to T3, the battery 121 is charged by the charging device 20 again at the power mP, and from T3 to T4, the two pulse discharges are performed again on the battery 121 by the charging device 20. From T4 to T5, the above steps are repeated until the battery 121 is fully charged or charged to a certain state of charge.

That is, the charging method for the battery in this embodiment includes a constant-power charging step, and two constant-power pulse discharge steps.

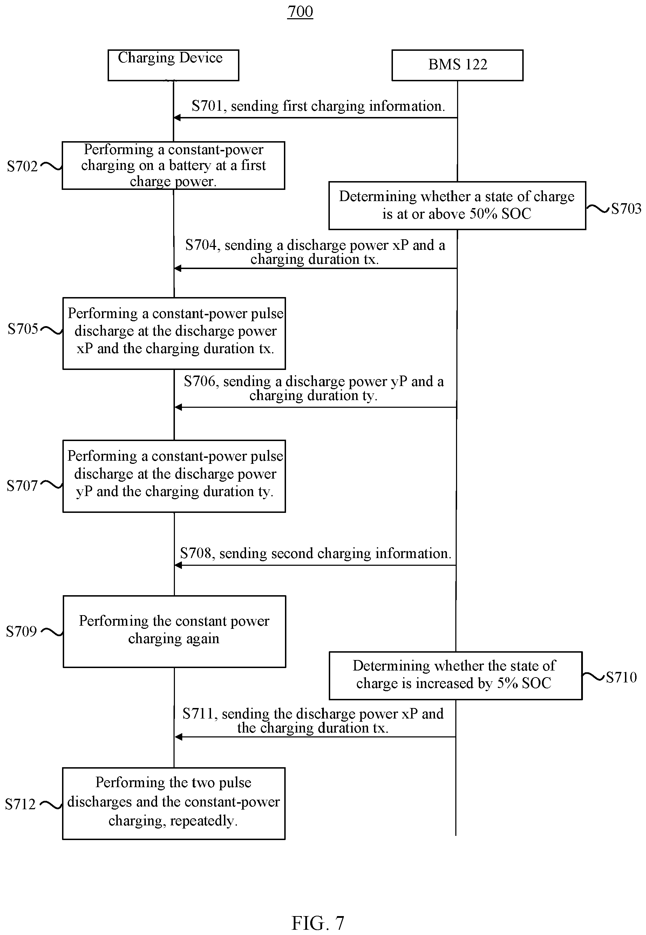

Hereinafter, the constant-power charging and the two constant-power pulse discharges shown in FIG. 6 will be described in detail with reference to FIG. 7.

FIG. 7 is a flowchart of a charging method 700 for a secondary battery according to one embodiment of the present application.

As shown in FIG. 7, the charging method 700 for the secondary battery in this embodiment includes the following steps S701 to S712.

In step S701, a first charge power mP is sent by the BMS 122 to the charging device 20. For example, m=2 may be set.

In step S702, a constant-power charging is performed on the battery 121 by the charging device 20 at the first charge power mP. Referring to the waveform of power of the constant-power charging from 0 to T1 in FIG. 6.

In step S703, a SOC of a battery 121 is detected and calculated by the BMS 122, and whether the SOC of the battery 121 reaches, for example, 50% SOC is determined by the BMS 122.

In step S704, pulse discharge information is sent by the BMS 122 to the charging device 20 in case that the state of charge SOC reaches 50%, and the pulse discharge information includes a discharge power xP and a discharge duration tx.

In a charging process shown in FIG. 7, the state of charge SOC increases as the charging process progresses. As mentioned above, after the constant-power charging, the step pulse discharge starts after the state of charge SOC reaches a certain value, which can effectively reduce the polarization of the battery 121. According to the experimental results, and taking into account the demand for quick charge, the number of subsequent pulse discharges should be shortened as much as possible, preferably k≥50% in this embodiment.

The discharge power xP and the discharge duration tx may be determined according to the requirement of depolarization. In this embodiment, preferably, the discharge power xP is greater than the first charge power mP. Experiments show that the polarization can be quickly eliminated by performing a constant-power charging on the battery 121 at a charge power mP to reach 50% SOC, and then performing a constant-power pulse discharge on the battery 121 at a large discharge power xP. In addition, experiments show that the polarization can be improved by setting the discharge duration tx in a range of 1 to 30 seconds. Considering the demand for quick charge, the discharge duration tx is preferably in a range of 1 to 20 seconds.

In step S705, a constant-power pulse discharge is performed on the battery 121 by the charging device 20 according to the received discharge power xP and discharge duration tx, and the discharge duration is tx.

Referring to the waveform of pulse discharge power from T1 to t1 in FIG. 6.

In step S706, pulse discharge information is sent by BMS 122 to charging device 20, and the information includes a discharge power yP and a discharge duration ty. The value of the coefficient y and the discharge duration ty may be determined according to the requirement of eliminating polarization. In this embodiment, preferably, the discharge power yP is smaller than the first charge power mP. Experiments show that the polarization of the battery 121 after standing still can be effectively improved after performing the constant-power charging on the battery 121 at the charge power mP to reach 50% SOC, and then performing the constant-power pulse discharge of the battery 121 at a small discharge power yP.

In addition, experiments show that the polarization can be improved when the discharge duration ty is set in a range of 1 to 30 seconds. Considering the demand for quick charge, the discharge duration ty is preferably in a range of 1 to 20 seconds.

In step S707, a constant-power pulse discharge is performed on the battery 121 by the charging device 20 according to the received discharge power yP and discharge duration ty, and the discharge duration is ty. Referring to the waveform of pulse discharge power from time t1 to time T2 in FIG. 6.

In step S708, the constant-power charge information including the first charge power mP is sent by the BMS 122 to the charging device 20 again when the discharge duration of the constant-power pulse discharge performed at the discharge power yP on the battery 121 by the charging device 20 reaches ty.

In step S709, a constant-power charging is performed again by the charging device 20 on the battery 121 at the charge power mP, to continue the charging process of the battery 121. Referring to the waveform of constant-power charge power from time T2 to time T3 in FIG. 6.

In step S710, a state of charge SOC of the battery 121 is detected and calculated by the BMS 122, and it is determined by by the BMS 122 whether the state of charge SOC reaches a predetermined value k2.

In step S711, pulse discharge information is sent by the BMS 122 to the charging device 20 in case that the state of charge SOC reaches the predetermined value k2, and the pulse discharge information includes the discharge power xP and the discharge duration tx.

In this embodiment, the value of k2 is preferably an increase in the SOC of the battery 121 by 5%. That is, the pulse discharge information such as discharge power xP and discharge duration tx is sent by the BMS 122 to the charging device 20 every time 5% electric quantity is charged.

In step S712, the steps S705 to S711 are repeated, the two constant-power pulse discharges and the constant-power charging are continuously performed on the battery 121 until the battery 121 is fully charged or charged to a certain state of charge. Referring to the waveform from time T4 to time T5 in FIG. 6.

As mentioned above, in this embodiment, by adding 2-step constant-power pulse discharge steps in the constant-power charging process, the polarization of the battery 121 can be reduced, the cycle life of the battery 121 can be improve, and the quick charge can be ensured.

The following describes the experimental results, examples and comparative examples of improving a polarization condition of the battery 121 by the charging method of the present application.

The battery system adopted in the following experimental results, examples and comparative examples is a ternary lithium battery, using a ternary material of lithium nickel-cobalt-manganate ($Li(NiCoMn)O_2$) as a main cathode material, and using the graphite as a main anode material, in combination with a diaphragm, commercial electrolyte and shell assembled into a laminated battery, where the diaphragm is polyethylene material, and the electrolyte is composed of ethylene carbonate (EC), ethyl methyl carbonate (EMC) and diethyl carbonate (DEC) in a volume ratio of 1:1:1 to form a solution, where $LiPF_6$ is dissolved in the above solution evenly to obtain the electrolyte, and the concentration of $LiPF_6$ is 1.2mol/L. Under a temperature of 25°C, the full charge capacity of the ternary lithium battery is 130 mAh, the charge cut-off voltage is 4.25 V, and the lower limit of the voltage is 2.8 V.

FIG. 8 shows experimental results of an improvement of anode instantaneous potential when the pulse discharge is performed at different discharge powers after the constant-power charging according to the charging method of the present application.

In the experiment shown in FIG. 8, the constant-power charging is performed by charging device 20 on the battery 121 at a charge power 2P (that is, m=2), and every time 5% electric quantity is charged, i.e., every time the SOC of battery 121 is increased by 5%, the charging is suspended, and after standing still for 10 to 30 minutes, a potential V1 at the anode (hereinafter referred to as "reference potential") is measured. Then, the pulse discharge is performed by charging device 20 on the battery 121 at a discharge power Pz and a discharge duration tz, and a potential V2 at the anode is measured at the end of the discharge duration tz. After standing still for 10 to 30 minutes, a potential V3 at the anode is measured. Afterwards, the charging device 20 continues to perform the constant-power charging on the battery 121 at the charge power 2P until the SOC is increased by 5%, and after standing still for 10 to 30 minutes, the reference potential V1 is measured. Then, the pulse discharge is performed again by charging device 20 on the battery 121 at the discharge power Pz and the discharge duration tz, and the potential V2 at the anode is measured at the end of the discharge duration tz. After the standing still for 10 to 30 minutes, the potential V3 at the anode is measured. This cycle is repeated until the battery 121 is fully charged, thereby obtaining the anode potentials V1, V2, V3 corresponding to each SOC value from 5% SOC to 100% SOC.

The setting of a standing step after the constant-power charging and pulse discharge can guarantee that the influence of polarization is thoroughly eliminated before carrying out follow-up experiment again, so each charging and discharge experiment is to carry out independently after eliminating polarization, without mutual influence.

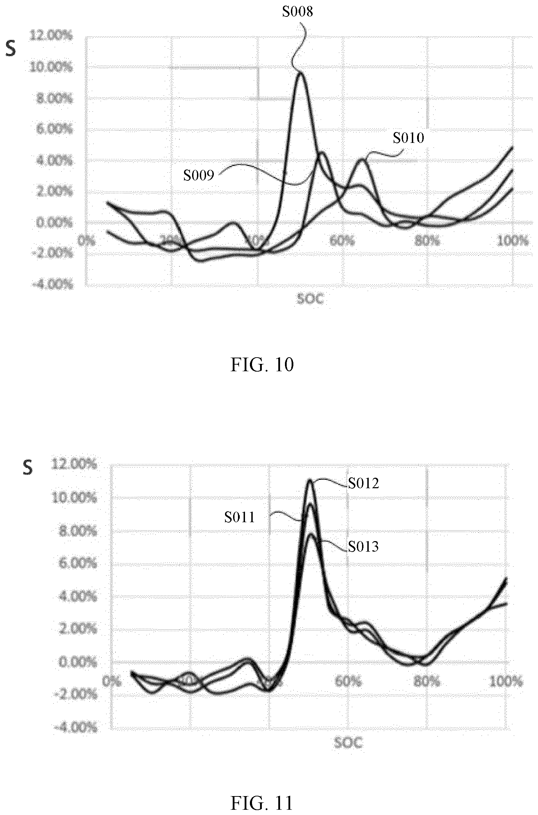

V1 measured in this way is the anode potential after the constant-power charging and the standing step, and V2 is the anode potential at the end of the pulse discharge, referred to as "anode instantaneous potential". V3 is the anode potential after the pulse discharge and the standing step, so V3 is referred to as "anode potential after standing". Regarding V3, it will be described with reference to FIG. 10 and FIG. 11.

An improvement percentage R of anode instantaneous potential is defined as follows:

$$R=(V2-V1)/V1 * 100\% \qquad (1)$$

R represents an effect of pulse discharge on eliminating the instantaneous polarization of the anode, which can reflect the impact of the pulse discharge step (i.e., the first discharge step) immediately after the constant-power charging on polarization.

The experimental curves of the improvement of anode instantaneous potential at different discharge powers are obtained, where the values of discharge power Pz are 1P, 2P, 4P respectively, and the discharge duration tz is 5 seconds.

In order to compare the experimental results under different discharge powers, an initial status of battery 121 should remain the same under different discharge powers, therefore, before starting to charge the battery 121, the battery 121 is discharged to a full-discharged state, that is, a status of 0% SOC, so as to maintain the same initial status.

In FIG. 8, the horizontal axis is the state of charge SOC of the battery 121, the vertical axis is the improvement percentage R of anode instantaneous potential, and the curves S001, S002, and S003 correspond to the discharge powers Pz of 1P, 2P, and 4P, respectively.

As shown in FIG. 8, as the constant-power charging is performed on the battery 121 by the charging device 20, the state of charge SOC continues to increase. When the state of charge SOC reaches a certain value, the constant-power pulse discharge on the battery 121 is started. The state of charge SOC, as an initial value of the pulse discharge, has a great influence on eliminating the instantaneous polarization of the anode. As shown by the curves S001, S002, and S003, under different discharge powers, the improvement of the anode potential has increased significantly when the state of charge ≥ 40% SOC, that is, the polarization can be significantly improved when the constant-power pulse discharge is performed on the battery 121 under a condition that the state of charge ≥ 40% SOC. This corresponds to the lithium intercalation platform of the anode material graphite. The constant-power charging process will form a large polarization, and the pulse discharge after the constant-power charging can improve the polarization.

Considering the demand for quick charge, the number of pulse times should be reduced as much as possible, thus it is preferred in the present application that the pulse discharge is started after the state of charge reaches 50% SOC, that is, k≥50%, in this way, the quick charge of battery can be guaranteed, meanwhile the polarization of the battery can be improved.

As shown in FIG. 8, the improvement of anode potential is at the maximum when the discharge power Pz is 4P, the improvement of anode potential is at the minimum when the discharge power Pz is 1P, and the improvement of anode potential has been obvious when discharge power Pz is 2P. Therefore, to perform the pulse discharge at a larger discharge power after the constant-power charging is beneficial to improve the instantaneous potential of the anode and is conducive to to rapidly eliminate polarization.

In the present application, preferably, the discharge power xP in a first step of pulse discharge performed after the constant-power charging is greater than the first charge power mP. As an example, m=2, and then it is further preferred that $2^{\wedge}x^{\wedge}4$.

FIG. 9 shows experimental results of an improvement of anode instantaneous potential when the pulse discharge is performed at different discharge durations after the constant-power charging according to the charging method of the present application.

The experimental method and the acquisition method of experimental data of FIG. 9 are the same as FIG. 8, that is, the constant-power charging is performed by charging device 20 on the battery 121 at a charge power 2P, and every time 5% electric quantity is charged, i.e., every time the SOC of battery 121 is increased by 5%, the charging is suspended, and after standing still for 10 to 30 minutes, a potential V1 at the anode (hereinafter referred to as "reference potential") is measured. Then, the pulse discharge is performed by charging device 20 on the battery 121 at a discharge power 2P and a discharge duration tz, and a potential V2 at the anode is measured at the end of the discharge duration tz. After standing still for 10 to 30 minutes, a potential V3 at the anode is measured. Afterwards, the charging device 20 continues to perform the constant-power charging on the battery 121 at the charge power 2P until the SOC is increased by 5%, and after standing still for 10 to 30 minutes, the reference potential V1 is measured. Then, the pulse discharge is performed again by charging device 20 on the battery 121 at the discharge power Pz and the discharge duration tz, and the potential V2 at the anode is measured at the end of the discharge duration tz. After the standing still for 10 to 30 minutes, the potential V3 at the anode is measured. This cycle is repeated until the battery 121 is fully charged, then the anode potentials V1, V2, V3 corresponding to each SOC value from 5% SOC to 100% SOC are obtained.

The experimental curves of the improvement of anode instantaneous potential at different discharge durations are obtained where the values of discharge duration tz are 5 seconds, 10 seconds, 20 seconds, 30 seconds, respectively.

Similarly, in order to compare the experimental results under different discharge durations, the initial status of the battery 121 should remain the same, therefore, before starting to charge the battery 121, the battery 121 is discharged to a full-discharged state, that is, a status of 0% SOC, so as to maintain the same initial status.

In FIG. 9, the horizontal axis is the state of charge SOC of the battery 121, the vertical axis is the improvement percentage R of anode instantaneous potential defined by the above formula (1), and the curves S1, S2, S3, and S4 correspond to the discharge durations tz of 5 seconds, 10 seconds, 20 seconds, 30 seconds, respectively.

As shown by the curves S1, S2, S3, S4 in FIG. 9, under the same discharge power, but different discharge durations, the improvement of anode potential is increased significantly when the state of charge ≥ 40% SOC, especially when the state of charge ≥ 50% SOC.

As shown in FIG. 9, the improvement of anode potential is at the maximum when the discharge duration is 30 seconds, the improvement of anode potential is at the minimum when discharge duration is 5 seconds, and the improvement of anode potential has been obvious when the discharge duration is 10 seconds, 20 seconds. Therefore, to perform the pulse discharge at a longer discharge duration after the constant-power charging is beneficial to improve the instantaneous potential of the anode and is conducive to eliminate polarization. Thus, in the present application, the discharge duration is preferably in a range of 1 to 30 seconds.

In addition, comparing FIG. 8 and FIG. 9, it can be seen that the improvement of anode instantaneous potential caused by increasing the pulse time from 5 seconds to 30 seconds is smaller than the improvement of anode instantaneous potential caused by increasing the pulse power. Therefore, by increasing the power of the pulse discharge, a better polarization improvement effect can be obtained. Considering the demand for quick charge, the charging duration should be shortened, so it is further optimized that the discharge duration is in a range of 1 to 20 seconds.

FIG. 8 and FIG. 9 are the experimental results of the improvement of anode instantaneous potential by performing the pulse discharge after the constant-power charging, showing that a high-power pulse discharge can rapidly and greatly improve the instantaneous potential V2 of the anode at the end of the pulse discharge.

It is noted based on experiments that the anode potential will change upon performing the pulse discharge after the constant-power charging, and then leaving the battery 121 standing for a certain period of time. The improvement of anode potential is quite different from the experimental results shown in Figures 8 and 9.

FIG. 10 shows experimental results of an improvement of anode potential in conditions that the pulse discharge is performed at different discharge powers after the constant-power charging, and the battery 121 is left standing.

The experimental method and the acquisition method of experimental data of FIG. 10 are the same as FIG. 8, that is, the constant-power charging is performed by charging device 20 on the battery 121 at a charge power 2P, and every time 5% electric quantity is charged, i.e., every time the SOC of battery 121 is increased by 5%, the charging is suspended, and after standing still for 10 to 30 minutes, a potential V1 at the anode (hereinafter referred to as "reference potential") is measured. Then, the pulse discharge is performed by charging device 20 on the battery 121 at a discharge power Pz and a discharge duration tz, and a potential V2 at the anode is measured at the end of the discharge duration tz. After standing still for 10 to 30 minutes, a potential V3 at the anode is measured. Afterwards, the charging device 20 continues to perform the constant-power charging on the battery 121 at the charge power 2P until the SOC is increased by 5%, and after standing still for 10 to 30 minutes, the reference potential V1 is measured. Then, the pulse discharge is performed again by charging device 20 on the battery 121 at the discharge power Pz and the discharge duration tz, and the potential V2 at the anode is measured at the end of the discharge duration tz. After the standing still for 10 to 30 minutes, the potential V3 at the anode is measured. This cycle is repeated until the battery 121 is fully charged, then the anode potentials V1, V2, V3 corresponding to each SOC value from 5% SOC to 100% SOC are obtained.

An improvement percentage S of anode potential after standing is defined as follows:

$$S=(V3-V1)/V1 * 100\% \qquad (2)$$

S represents the improvement of the anode polarization achieved by the pulse discharge after the battery 121 is left standing, reflecting the effect of the pulse discharge to eliminate the anode polarization in an actual use state.

In FIG. 10, the experimental curves of potential improvement after the anode stands still under different discharge powers are obtained, where the pulse discharges are respectively performed at the discharge power Pz of 1P, 2P, 4P, and the discharge duration tz is 10 seconds.

Similarly, in order to compare the experimental results under different discharge powers, the initial status of the battery 121 should remain the same under different discharge powers, therefore, before starting to charge the battery 121, the battery 121 is discharged to a full-discharged state, that is, a status of 0 % SOC, so as to maintain the same initial status.

In FIG. 10, the horizontal axis is the state of charge SOC of the battery 121, the vertical axis is the improvement percentage S of anode potential after standing, and curves S008, S009, and S010 correspond to the discharge powers Pz of 1P, 2P, and 4P, respectively.

As shown by the curves S008, S009, S010 in FIG. 10, for the same discharge power, the improvement of anode potential after standing are quite different under different state of charges, it is indicated there is an improvement when S is a positive number, and it is indicated that there is no improvement when S is a negative number. The curves S008, S009, and S010 all have positive and negative value areas, as well as peak areas, indicating that in some states of charge, the anode potential has an improvement after standing, in some states of charge, the anode potential has no improvement after standing, and in certain states of charge, the anode potential has a significant improvement after standing.

To be specific, in case that the discharge power Pz is 1P, when the state of charge is 50% SOC, the improvement of anode potential after standing reaches a peak value, about 9%; when the state of charge is greater than 50% SOC, the improvement of anode potential after standing is drops sharply, but S is basically a positive value, that is, there is still an improvement; and when the state of charge is smaller than 50% SOC, the improvement of anode potential after standing drops rapidly and the value of S became negative, that is, there is no improvement.

In case that the discharge power Pz is 2P, when state of charge is about 55% SOC, the improvement of anode potential after standing reaches a peak value, about 4.5%; when the state of charge is greater than 55% SOC, the improvement of anode potential after standing drops sharply, but S is basically a positive value, that is, there is still an improvement; and when the state of charge is smaller than 55% SOC, the improvement of anode potential after standing drops rapidly and the value of S became negative, that is, there is no improvement.

In case that the discharge power Pz is 4P, when the state of charge is about 65% SOC, the improvement of anode potential after standing reaches a peak value, about 4%; when the state of charge is greater than 65% SOC, the improvement of anode potential after standing drops sharply, but S is basically a positive value, that is, there is still an improvement; and when the state of charge is smaller than 65% SOC, the improvement of anode potential after standing drops rapidly, and the value of S became negative, that is, there is no improvement.

As shown by curves S008, S009, S010 in FIG. 10, the improvement of anode potential after standing under different discharge powers are quite different. The improvement is at the maximum when the discharge power Pz is 1P, and is at the minimum when discharge power Pz is 4P.

It can be seen that the anode potential will fall back to the reference potential V1 when the battery 121 is left standing for a certain period of time after the constant-power charging and the pulse discharge. Therefore, compared with the experimental results of FIG. 8 and FIG. 9, the improvement of anode potential in FIG. 10 is greatly reduced, and the improvement of anode potential after standing is relatively large when the pulse discharge is performed at a low power. The improvement of anode potential after standing is quite small when the pulse discharge is performed at a high power.

FIG. 11 is the same as FIG. 10, showing the experimental results of the improvement of anode potential after standing when the pulse discharge is performed at other different discharge powers.

The experimental conditions, experimental methods, and measurement methods of FIG. 11 are the same as those in FIG. 10, and repeated explanations are omitted below.

In FIG. 11, the pulse discharge is performed at the discharge powers Pz of 1P, 0.8P, 0.5P, respectively, and the discharge duration tz is 10 seconds, and curves S011, S012, S013 are respectively corresponded to the discharge powers 1P, 0.8P, 0.5P.

As shown by the curves S011, S012, S013 in FIG. 11, for the discharge powers Pz of 1P, 0.8P and 0.5P, when the state of charge is 50% SOC, the improvement of anode potential after standing reaches the peak value, respectively 9%, 11%, and 8%; when the state of charge is greater than 50% SOC, the improvement of anode potential after standing has positive values, i.e., the improvement is still existed. When the state of charge is smaller than 50% SOC, the improvement of anode potential after standing drops rapidly to a negative value, i.e., no improvement is existed. That is, for different discharge powers of 1P, 0.8P, and 0.5P, the improvement in anode potential after standing is basically the same.

It can be seen that, by performing a low-power pulse discharge after the constant-power charging, the anode potential after standing can be greatly improved, thereby improving the polarization. Therefore, in the present application, a low-power pulse discharge step (that is, a second pulse discharge step) is provided after the constant-power charging, as shown in FIG. 6 and FIG. 7, preferably the discharge power yP of the second pulse discharge is smaller than that of the first charge Power mP. As an example, m=2, then it is further preferred that $0.5 \leq y \leq 1$, and a pulse discharge duration of the second discharge step is in a range of 1 to 20 seconds.

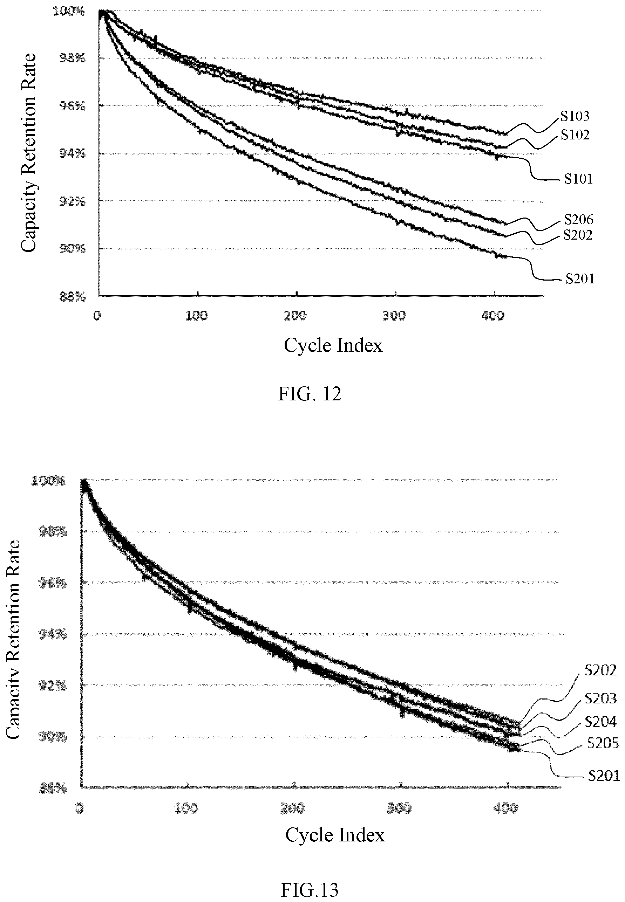

FIG. 12 shows experimental results of constant power cycle curves according to an embodiment and some comparative examples of the present application.

FIG. 13 shows experimental results of constant power cycle curves according to some comparative examples of the present application.

The cycle curve of the battery reflects a cycle life of the battery. In the embodiments of the present application, multiple constant-power pulse discharge processes are added in the constant-power charging process, which can reduce battery polarization and improve a constant power cycle life of the battery while ensuring that the time for quick charge of the battery is not affected. The experimental results are described in detail below.

In the experiment of measuring the cycle curve, firstly, the battery 121 is fully charged according to the charging method shown in FIG. 7, and then the following steps S801, S802 are performed to measure the cycle life of the battery 121.

In step S801, the battery 121 is left standing for 3 minutes.

Resting the battery 121 for 3 minutes can eliminate the influence of the over-potential generated in the previous charging process on the subsequent discharge in step 802.

In step S802, the battery 121 is discharged to a lower limit of an operation voltage, that is, the battery 121 is discharged to the lower limit 2.8V of the operation voltage of the battery 121 by connecting a load to a circuit of the battery 121, thus, a constant-power charging cycle is completed. The amount of electricity discharged from the battery 121 during this cycle is measured.

Afterwards, the battery 121 is fully charged again according to the charging method shown in FIG. 7, and then the steps S801 and S802 are performed to complete the next constant-power charging cycle, and the electric quantity discharged by the battery 121 in this cycle is measured.

The above steps are repeated to measure the electric quantity discharged in each constant-power charging cycle.

The electric quantity that battery 121 discharges in a first cycle is defined as 100%, a ratio of the electric quantity discharged in an N-th cycle and the electric quantity discharged in the first cycle is defined as the "capacity retention rate" of the N-th cycle.

In FIG. 12, the horizontal axis is a cycle index of constant-power charging, and the vertical axis is the capacity retention rate.

In FIG. 12, a curve S101 is the constant power cycle curve of Example 1, a curve S102 is the constant power cycle curve of Example 2, and a curve S103 is the constant power cycle curve of Example 3. The charging methods of Example 1, Example 2, and Example 3 are specifically as follows.

Example 1

1) performing a constant-power charging on a battery 121 at a power of 2P until a status 50% SOC is reached;

2) performing a pulse discharge on the battery 121 at a power of 2P, and a discharge duration is 5 seconds;

3) performing the pulse discharge on the battery 121 at a power of 1P, and the discharge duration is 5 seconds;

4) performing the constant-power charging on the battery 121 at the power of 2P to increase an electric quantity by 5% SOC;

5) Repeating the steps 2) to 4) until the battery 121 is fully charged, that is, 100% SOC is reached;

6) leaving the battery 121 standing for 3 minutes;

7) discharging the battery 121 to a lower limit of an operation voltage to complete a constant-power charging cycle, and measuring the electric quantity discharged by the battery 121 in this cycle; and

8) Repeating the steps 1) to 7), measuring the electric quantity discharged in each constant-power charging cycle of Example 1, and calculating the capacity retention rate of each cycle.

Example 2

1) performing a constant-power charging on a battery 121 at a power of 2P until a status 50% SOC is reached;

2) performing a pulse discharge on the battery 121 at a power of 2P, and a discharge duration is 5 seconds;

3) performing the pulse discharge on the battery 121 at a power of 1P, and the discharge duration is 10 seconds;

4) performing the constant-power charging on the battery 121 at the power of 2P to increase an electric quantity by 5% SOC;

5) Repeating the steps 2) to 4) until the battery 121 is fully charged, that is, 100% SOC is reached;

6) leaving the battery 121 standing for 3 minutes;

7) discharging the battery 121 to a lower limit of an operation voltage to complete a constant-power charging cycle, and measuring the electric quantity discharged by the battery 121 in this cycle; and

8) Repeating the steps 1) to 7), measuring the electric quantity discharged in each constant-power charging cycle of Example 1, and calculating the capacity retention rate of each cycle.

Example 3

1) performing a constant-power charging on a battery 121 at a power of 2P until a status of 50% SOC is reached;

2) performing a pulse discharge on the battery 121 at a power of 2P, and a discharge duration is 10 seconds;

3) performing the pulse discharge on the battery 121 at a power of 1P, and the discharge duration is 10 seconds;

4) performing the constant-power charging on the battery 121 at the power of 2P to increase an electric quantity by 5% SOC;

5) Repeating the steps 2) to 4) until the battery 121 is fully charged, that is, 100% SOC is reached;

6) leaving the battery 121 standing for 3 minutes;

7) discharging the battery 121 to a lower limit of an operation voltage to complete a constant-power charging cycle, and measuring the electric quantity discharged by the battery 121 in this cycle; and

8) Repeating the steps 1) to 7), measuring the electric quantity discharged in each constant-power charging cycle of Example 1, and calculating the capacity retention rate of each cycle.

As a comparison, FIG. 12 also shows the experimental results of the capacity retention rates of the charging methods in Comparative Examples 1, 2, and 6, which correspond to curves S201, S202, and S206 in FIG. 12, respectively.

FIG. 13 shows experimental results of the capacity retention rates of the charging methods in Comparative Examples 1, 2, 3, 4, and 5, which correspond to curves S201, S202, S203, S204, and S205 in FIG. 13, respectively. The charging methods in Comparative Examples 1 to 6 are specifically as follows.

Comparative Example 1

Step811, a constant-power charging is performed on a battery 121 at a power of 2P, until the battery is fully charged, i.e., a status of 100% SOC is reached.

Step S812, the battery 121 is left standing for 3 minutes.

Step S813, battery 121 is discharged to a lower limit of an operation voltage to complete a constant-power charging cycle, an electric quantity that battery 121 discharges in this cycle is measured.

Steps S811, S812, and S813 are repeated to measure the electric quantity discharged in each charging cycle of Comparative Example 1, and calculate the capacity retention rate of each cycle.

Comparative Example 2

Step S821, a constant-power charging is performed on a battery 121 at a power of 2P, until a status of 5% SOC is reached.

Step S822, a pulse discharge is performed on the battery 121 at a power of 2P, and a discharge duration is 10 seconds.

Step S823, the constant-power charging is performed on battery 121 at a power of 2P to increase an electric quantity by 5% SOC.

Step S824, the steps S822 and S823 are repeated until the battery 121 is fully charged, that is, the status of 100% SOC is reached.

Step S825, the battery 121 is left standing for 3 minutes;

Step S826, the battery 121 is discharged to a lower limit of an operation voltage to complete a constant-power charging cycle, and the electric quantity that battery 121 discharges in this cycle is measured.

Steps S821 to S826 are repeated to measure the electric quantity discharged in each charging cycle of Comparative Example 2, and calculate the capacity retention rate of each cycle.

Comparative Example 3

Step S831, a constant-power charging is performed on a battery 121 at a power of 2P, until a status of 5% SOC is reached.

Step S832, a pulse discharge is performed on the battery 121 at a power of 1P, and the discharge duration is 10 seconds.

Step S833, the constant-power charging is performed on battery 121 at a power of 2P to increase an electric quantity by 5% SOC.

Step S834, the steps S832 and S833 are repeated until the battery 121 is fully charged, that is, the status of 100% SOC is reached.

Step S835, the battery 121 is left standing for 3 minutes.

Step S836, the battery 121 is discharged to a lower limit of an operation voltage to complete a constant-power charging cycle, and the electric quantity that battery 121 discharges in this cycle is measured.

Steps S831 to S836 are repeated to measure the electric quantity discharged in each charging cycle of Comparative Example 3, and calculate the capacity retention rate of each cycle.

Comparative Example 4

Step S841, a constant-power charging is performed on a battery 121 at a power of 2P, until a status of 70% SOC is reached.

Step S842, a pulse discharge is performed on the battery 121 at a power of 1P, and the discharge duration is 10 seconds.

Step S843, the constant-power charging is performed on battery 121 at a power of 2P to increase an electric quantity by 5% SOC.

Step S844, the steps S842 and S843 are repeated until the battery 121 is fully charged, that is, the status of 100% SOC is reached.

Step S845, the battery 121 is left standing for 3 minutes.

Step S846, the battery 121 is discharged to a lower limit of an operation voltage to complete a constant-power charging cycle, and the electric quantity that battery 121 discharges in this cycle is measured.

Steps S841 to S846 are repeated to measure the electric quantity discharged in each charging cycle of Comparative Example 4, and calculate the capacity retention rate of each cycle.

Comparative Example 5

Step S851, a constant-power charging is performed on a battery 121 at a power of 2P, until a status of 90% SOC is reached.

Step S852, a pulse discharge is performed on the battery 121 at a power of 1P, and the discharge duration is 10 seconds.

Step S853, the constant-power charging is performed on battery 121 at a power of 2P to increase an electric quantity by 5% SOC.

Step S854, the steps S852 and S853 are repeated until the battery 121 is fully charged, that is, the status of 100% SOC is reached.

Step S855, the battery 121 is left standing for 3 minutes.

Step S856, the battery 121 is discharged to a lower limit of an operation voltage to complete a constant-power charging cycle, and the electric quantity that battery 121 discharges in this cycle is measured.

Steps S841 to S846 are repeated to measure the electric quantity discharged in each charging cycle of Comparative Example 5, and calculate the capacity retention rate of each cycle.

Comparative Example 6

Step S861, a constant-power charging is performed on a battery 121 at a power of 2P, until reaching 5% SOC.

Step S862, a pulse discharge is performed on the battery 121 at a power of 2P, and a discharge duration is 10 seconds.

Step S863, the constant-power charging is performed on battery 121 at a power of 2P to increase an electric quantity by 5% SOC.

Step S864, the steps S862 and S863 are repeated until the battery 121 is fully charged, that is, the status of 100% SOC is reached.

Step S865, the battery 121 is left standing for 3 minutes.

Step S866, the battery 121 is discharged to a lower limit of an operation voltage to complete a constant-power charging cycle, and the electric quantity that battery 121 discharges in this cycle is measured.

Steps S821 to S826 are repeated to measure the electric quantity discharged in each charging cycle of Comparative Example 6, and calculate the capacity retention rate of each cycle.

Consider the experimental results of FIG. 12 and FIG. 13. Examples 1, 2, and 3 are the charging methods of the present application shown in FIG. 7, that is, after the battery is charged at a constant power to 50% SOC, a high-power pulse discharge and a low-power pulse discharge are performed, and the discharge duration is in a range of 1 to 20 seconds. Comparative Examples 1 to 6 are Examples of constant-power charging, but they do not meet the requirements of the charging method of the present application, there is no or only a one-step pulse discharge process, or the pulse discharge is not started at or above 50% SOC. As shown in FIG. 12, after about 400 constant-power charging cycles, the capacity retention rates of Examples 1, 2, and 3 are significantly higher than those of Comparative Examples 1, 2, and 6. The cycle performance is greatly improved.

The pulse discharge duration of Example 3 is 10 seconds, being longer than the pulse discharge duration (5 seconds) of Example 1, and the capacity retention rate of Example 3 is higher than that of Example 1.

The discharge duration for the high-power pulse discharge step of Example 2 is 5 seconds, same as the high-power pulse discharge step of Example 1, but the discharge duration for the low-power pulse discharge step of Example 2 is 10 seconds, being long than the discharge duration (5 seconds) for the low-power pulse step of Example 1, and the capacity retention rate of Example 2 is also higher than that of Example 1.

That is, the cycle performance can be further improved by properly prolonging the discharge duration.

The polarization generated during the constant-power charging process, which results in a large loss of battery capacity, can instantaneously and quickly counteracted by the high-power pulse discharge in the first step, and the anode after standing potential can be improved by the low-power pulse discharge in the second step, thereby achieving a substantial improvement in cycle life.

Comparative Example 1 has only a constant-power charging step, without a pulse discharge step, and the capacity retention rate of Comparative Example 1 is the lowest. Compared with Comparative Example 1, Comparative Examples 2 to 6 include a step of pulse discharge, so the capacity retention rates of Comparative Examples 2 to 6 are somewhat improved compared with Comparative Example 1. The pulse discharge step in Comparative Example 6 is a high-power pulse discharge step, the pulse discharge step in Comparative Examples 2 to 5 is a low-power pulse discharge step, and the capacity retention rate of Comparative Example 6 is slightly improved compared with Comparative Examples 2 to 5. The pulse discharge of Comparative Examples 2 and 6 are started at 5% SOC. The pulse discharge in Comparative Examples 3 to 5 is started at statuses above 50% SOC, but Comparative Examples 3 and 5 only have one low-power pulse discharge step, and thus the capacity retention rates of Comparative Examples 3 to 5 are almost the same.

It can be seen that the capacity retention rate is not significantly improved in a case that only the pulse discharge is set to be started at or above 50% SOC without providing the two or more steps of pulse discharges as included in the charging method of the present application.

As shown in FIG. 13, in comparative examples 2 to 5, because the two or more steps of pulse discharge are provided, the improvement in cycle life, with respect to comparative example 1, are substantially the same whether the pulse discharge is started at 50% SOC, or the pulse discharge is started at 5% SOC. In Comparative Example 4, the pulse discharge is started at 70%, and in Comparative Example 5, the pulse discharge is started at 90%, but the cycle life in Comparative Examples 4 and 5 is decreased with respect to Comparative Examples 2, 3, and 6.

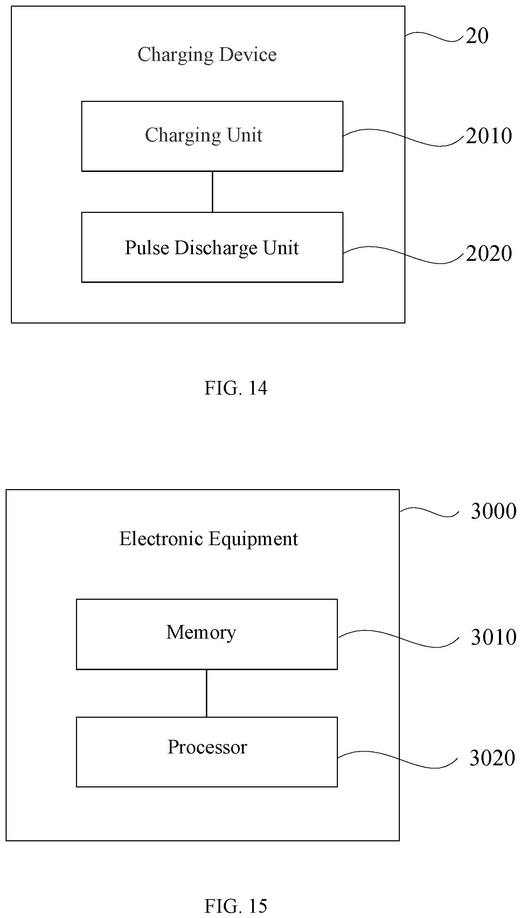

FIG. 14 is a structural diagram of a charging device for a secondary battery according to the present application.

As shown in FIG. 14, the charging device 20 includes a charging unit 2010 and a pulse discharge unit 2020. The charging unit 2010 is configured to perform a constant-power charging on battery 121 at a charge power mP according to charge information sent by a battery management system BMS 122, and the pulse discharge unit 2020 is configured to perform a constant-power pulse discharge on the battery 121 according to pulse discharge information sent by the battery management system BMS 122. In case that the battery 121 is charged by the charging device 20, when a battery status parameter of the battery 121 reaches a predetermined value, for example, a state of charge is at or above 50% SOC, the pulse discharge unit 2020, according to the pulse discharge information sent by the BMS 122, is configured to perform multiple constant-power pulse discharges on the battery 121.

In some embodiments, after the multiple pulse discharges are performed by the pulse discharge unit 2020, the constant-power charging is performed again by the charging unit 2010 on the battery 121 at the charge power mP, and when the battery status parameter of the battery 121 reaches a second predetermined value, for example, the state of charge is increased by 5% SOC, and the pulse discharge unit 2020 is configured to perform multiple constant-power pulse discharges again.

In some embodiments, the multiple pulse discharges and the constant-power charges are alternately performed by the pulse discharge unit 2020 and the charging unit 2010 until the battery 121 is fully charged or charged to a certain state of charge.

The present application also provides a computer-readable storage medium. In the computer-readable storage medium, a computer-executable instruction is stored. When the computer-executable instruction is executed by a processor, the charging method for the secondary battery of the present application is performed.

The present application also provides electronic equipment, which is configured to perform the charging method for the secondary battery of the present application.

FIG. 15 is a structural diagram of electronic equipment of the present application.

As shown in FIG. 15, the electronic equipment 3000 includes a memory 3010 and a processor 3020. In the memory 3010, a computer instruction is stored, and the computer instruction, when executed by the processor 3020, causes the processor 3020 to implement the charging method for the secondary battery of the present application.

The above embodiments are only used to illustrate the technical solutions of the present application, and are not intended to limit the present application. Although the present application has been described in detail with reference to the foregoing embodiments, those of ordinary skills in the art should understand that: modifications may still be made to the technical solutions in the foregoing embodiments, or some or all of the technical features may be equivalently substituted. These modifications or substitutions do not make the essence of the corresponding technical solutions deviate from the scope of the technical solutions of the various embodiments of the present application, and shall all be covered by the scope of the claims and description of this application. In particular, as long as there is no structural conflict, the technical features mentioned in the various embodiments may be combined in any manner. The present application is not limited to the specific embodiments disclosed herein, but includes all technical solutions falling within the scope of the claims.

## Claims

1. A charging method for a secondary battery, comprising:

   sending, by a battery management system (Battery Management System, BMS), first charge information to a charging source, wherein the first charge information comprises a first charge power;
   performing, by the charging source, a constant-power charging on the secondary battery according to the first charge power;
   sending, by the BMS, a plurality of pulse discharge information to the charging source when a battery status parameter reaches a first predetermined value, wherein each pulse discharge information comprises a discharge power and a discharge duration; and
   performing, by the charging source, multiple constant-power pulse discharges on the secondary battery according to the discharge power and the discharge duration in the plurality of pulse discharge information.

**2.** The charging method for the secondary battery according to claim 1, wherein,
the battery status parameter comprises a state of charge (State of Charge, SOC) of the secondary battery.

**3.** The charging method for the secondary battery according to claim 2, wherein,
the first predetermined value is above 50% SOC.

**4.** The charging method for the secondary battery according to any one of claims 1 to 3, further comprising:

sending, by the BMS, first pulse discharge information to the charging source when the battery status parameter reaches the first predetermined value, wherein the first pulse discharge information comprises a first discharge power and a first discharge duration;
performing, by the charging source, a first constant-power pulse discharge on the secondary battery according to the first pulse discharge information;
sending, by the BMS, second pulse discharge information to the charging source after the first discharge duration, wherein the second pulse discharge information comprises a second discharge power and a second discharge duration; and
performing, by the charging source, a second constant-power pulse discharge on the secondary battery according to the second pulse discharge information.

**5.** The charging method for the secondary battery according to claim 4, wherein,
the first discharge power is greater than the first charge power, and the second discharge power is smaller than the first charge power.

**6.** The charging method for the secondary battery according to claim 4, wherein,

the first discharge duration is in a range of 1 to 20 seconds, and
the second discharge duration is in a range of 1 to 20 seconds.

**7.** The charging method for the secondary battery according to claim 1, further comprising:

performing, by the charging source, the constant-power charging on the secondary battery at the first charge power again according to second charge information sent by the BMS after performing the multiple constant-power pulse discharges; and

performing, by the charging source, the multiple pulse constant-power discharges on the secondary battery again according to the plurality of pulse discharge information sent by the BMS when the battery status parameter of the secondary battery reaches a second predetermined value.

**8.** The charging method for the secondary battery according to claim 7, wherein, the second predetermined value is an increase in the SOC by 5%.

**9.** The charging method for the secondary battery according to claim 7, further comprising:
performing repeatedly, by the charging source, the constant-power charging and the multiple pulse constant-power discharges according to the second charge information and the plurality of pulse discharge information sent by the BMS until a voltage of the secondary battery reaches a predetermined value.

**10.** A charging device for a secondary battery, comprising:

a charging unit, configured to perform a constant-power charging on the secondary battery at a first charge power according to charge information sent by a battery management system (BMS); and
a pulse discharge unit, configured to perform a constant-power pulse discharge on the secondary battery according to pulse discharge information sent by the BMS,
wherein the pulse discharge unit is configured to perform multiple constant-power pulse discharges on the secondary battery according to a plurality of pulse discharge information sent by the BMS when a battery status parameter reaches a first predetermined value.

**11.** The charging device for the secondary battery according to claim 10, wherein:

the charging unit is configured to perform the constant-power charging on the secondary battery at the first charge power again after the multiple pulse discharges are performed by the pulse discharge unit; and
the pulse discharge unit is configured to perform the multiple constant-power pulse discharges again when the battery status parameter of the secondary battery reaches a second predetermined value.

**12.** The charging device for the secondary battery according to claim 11, wherein:
the multiple pulse discharges and the constant-power charging are alternately performed by the pulse discharge unit and the charging unit until a voltage of the secondary battery reaches a predetermined value.

13. A computer-readable storage medium, wherein a computer-executable instruction is stored in the computer-readable storage medium, and when the computer-executable instruction is executed by a processor, the method according to any one of claims 1 to 9 is implemented.

14. Electronic equipment, comprising:

a memory, on which a computer instruction is stored, and
a processor, configured to perform the method according to any one of claims 1-9 by executing the computer instruction.

FIG. 1

Charging System 100

FIG. 2

300

| Charging Device 20 | | BMS 122 |
|---|---|---|

S301, sending first charge information.

S302 — **Performing a constant power charge on a battery 121 at a first charge power.**

**Detecting whether a battery status parameter reaches a first predetermined value.** ∿S303

S304, sending multiple pulse discharge information in sequence.

S305∿ **Performing multiple constant-power pulse discharges on a secondary battery in sequence.**

FIG. 3

Charging Power

Charging at a

mP

yP
xP

T1 t1 t2 T2    T3 T4          T5    Time (t)

FIG. 4

500

| Charging Device | | BMS 122 |
|---|---|---|

S501, sending first charge information.

S502 — **Performing a constant-power charge on a battery 121 at a power mP.**

**Determining whether a state of charge reaches a predetermined value.** — S503

S504, sending a discharge power xP and a discharge duration tx.

S505 — **Performing a constant-power pulse discharge at the discharge power xP and the discharge duration tx.**

S506, sending a discharge power yP and a discharge duration ty.

S507 — **Performing a constant power pulse discharge at the discharge power yP and the discharge duration ty.**

S508 — **Performing multiple constant-power pulse discharges.**

S509, sending second charge information.

S510 — **Performing the constant power charge again.**

**Determining whether the state of charge reaches a second predetermined value.** — S511

S512, sending pulse discharge information.

S513 — **Performing multi-step constant-power pulse discharge in sequence.**

S514 — **Performing the constant power charge and multi-step pulse discharge, repeatedly.**

FIG. 5

FIG. 6

700

```
┌─────────────────────┐                    ┌─────────────────────┐
│   Charging Device   │                    │      BMS 122        │
└─────────────────────┘                    └─────────────────────┘
```

S701, sending first charging information.

S702 ⌇ Performing a constant-power charging on a battery at a first charge power.

Determining whether a state of charge is at or above 50% SOC  ⌇ S703

S704, sending a discharge power xP and a charging duration tx.

S705 ⌇ Performing a constant-power pulse discharge at the discharge power xP and the charging duration tx.

S706, sending a discharge power yP and a charging duration ty.

S707 ⌇ Performing a constant-power pulse discharge at the discharge power yP and the charging duration ty.

S708, sending second charging information.

S709 ⌇ Performing the constant power charging again

Determining whether the state of charge is increased by 5% SOC  ⌇ S710

S711, sending the discharge power xP and the charging duration tx.

S712 ⌇ Performing the two pulse discharges and the constant-power charging, repeatedly.

FIG. 7

FIG. 8

FIG. 9

FIG. 10

FIG. 11

FIG. 12

FIG.13

Charging Device — 20

Charging Unit — 2010

Pulse Discharge Unit — 2020

FIG. 14

Electronic Equipment — 3000

Memory — 3010

Processor — 3020

FIG. 15

## INTERNATIONAL SEARCH REPORT

International application No.

**PCT/CN2021/132512**

| | |
|---|---|
| **A. CLASSIFICATION OF SUBJECT MATTER** | |
| H01M 10/44(2006.01)i | |
| According to International Patent Classification (IPC) or to both national classification and IPC | |

| |
|---|
| **B. FIELDS SEARCHED** |
| Minimum documentation searched (classification system followed by classification symbols) |
| H01M |
| Documentation searched other than minimum documentation to the extent that such documents are included in the fields searched |
| Electronic data base consulted during the international search (name of data base and, where practicable, search terms used) |
| CNKI, CNPAT, WPI, EPODOC: 电池, 充电, 放电, 极化, 脉冲, 多次, 多个, 恒定功率, 恒功率, 时间, BMS, SOC, battery, charge, discharge, polarization, pulse |

| |
|---|
| **C. DOCUMENTS CONSIDERED TO BE RELEVANT** |

| Category* | Citation of document, with indication, where appropriate, of the relevant passages | Relevant to claim No. |
|---|---|---|
| Y | CN 102306854 A (JIANG GUANLUO) 04 January 2012 (2012-01-04) <br> claims 1-6, description, paragraphs [0024]-[0030], and figures 2-3 | 1-14 |
| Y | CN 108110349 A (NINGDE CONTEMPORARY AMPEREX TECHNOLOGY CO., LTD.) 01 June 2018 (2018-06-01) <br> claims 1-12, description, paragraphs [0057]-[0079] and [0154] | 1-14 |
| A | CN 113625180 A (YINLONG ENERGY CO., LTD.) 09 November 2021 (2021-11-09) <br> entire document | 1-14 |
| A | CN 110729520 A (LISHEN POWER BATTERY SYSTEMS CO., LTD.) 24 January 2020 (2020-01-24) <br> entire document | 1-14 |
| A | US 6137267 A (DELL COMPUTER CORPORATION) 24 October 2000 (2000-10-24) <br> entire document | 1-14 |

☐ Further documents are listed in the continuation of Box C. ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| | |
|---|---|
| Date of the actual completion of the international search | Date of mailing of the international search report |
| **09 July 2022** | **23 August 2022** |
| Name and mailing address of the ISA/CN <br><br> **China National Intellectual Property Administration (ISA/CN)** <br> **No. 6, Xitucheng Road, Jimenqiao, Haidian District, Beijing 100088, China** | Authorized officer |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/132512**

| Patent document cited in search report | | | Publication date (day/month/year) | Patent family member(s) | | | Publication date (day/month/year) |
|---|---|---|---|---|---|---|---|
| CN | 102306854 | A | 04 January 2012 | WO | 2013023536 | A1 | 21 February 2013 |
| | | | | CN | 102810701 | A | 05 December 2012 |
| CN | 108110349 | A | 01 June 2018 | None | | | |
| CN | 113625180 | A | 09 November 2021 | None | | | |
| CN | 110729520 | A | 24 January 2020 | None | | | |
| US | 6137267 | A | 24 October 2000 | None | | | |

Form PCT/ISA/210 (patent family annex) (January 2015)